(19) Europäisches Patentamt

European Patent Office

Office européen des brevets

(11) **EP 0 919 096 B1**

(12) **FASCICULE DE BREVET EUROPEEN**

(45) Date de publication et mention
de la délivrance du brevet:
**01.12.2004 Bulletin 2004/49**

(51) Int Cl.$^7$: **H04M 9/08**

(21) Numéro de dépôt: **98921538.9**

(22) Date de dépôt: **15.04.1998**

(86) Numéro de dépôt international:
**PCT/FR1998/000757**

(87) Numéro de publication internationale:
**WO 1998/047276 (22.10.1998 Gazette 1998/42)**

(54) **PROCEDE D'ANNULATION D'ECHO ACOUSTIQUE MULTI-VOIES ET ANNULEUR D'ECHO ACOUSTIQUE MULTI-VOIES**

VERFAHREN UND EINRICHTUNG ZUR MEHRKANALIGEN KOMPENSATION EINES AKUSTISCHEN ECHOS

METHOD FOR CANCELLING MULTICHANNEL ACOUSTIC ECHO AND MULTICHANNEL ACOUSTIC ECHO CANCELLER

(84) Etats contractants désignés:
**DE GB IT**

(30) Priorité: **16.04.1997 FR 9704682**

(43) Date de publication de la demande:
**02.06.1999 Bulletin 1999/22**

(73) Titulaire: **FRANCE TELECOM**
**75015 Paris (FR)**

(72) Inventeurs:
• **GILLOIRE, André**
**F-22300 Lannion (FR)**
• **TURBIN, Valérie**
**F-22400 Lamballe (FR)**

(74) Mandataire: **Fréchède, Michel et al**
**Cabinet Plasseraud**
**84, rue d'Amsterdam**
**75009 Paris (FR)**

(56) Documents cités:
**EP-A- 0 627 825          EP-A- 0 709 999**

• **SONDHI M M ET AL: "STEREOPHONIC ACOUSTIC ECHO CANCELLATION - AN OVERVIEW OF THE FUNDAMENTAL PROBLEM" IEEE SIGNAL PROCESSING LETTERS, vol. 2, no. 8, août 1995, pages 148-151, XP000527174**

**Description**

La présente invention concerne un procédé d'annulation d'écho acoustique multi-voies, ainsi qu'un annuleur d'écho acoustique multi-voies.

Dans le domaine de la transmission des signaux sonores, dans certaines applications telles que la téléphonie "mains libres" et la téléconférence, l'écho acoustique est une source de gêne considérable. Les dispositifs connus qui combattent l'écho acoustique comportent généralement des filtres adaptatifs, dont le rôle est d'identifier et de modéliser la réponse impulsionnelle du chemin de couplage acoustique entre le ou les haut-parleurs et le ou les microphones du système de transmission de signaux sonores considéré.

Le document EP-A-0 709 999 divulgue une méthode et un dispositif d'annulation d'écho à N voies de signal sonore qui met en oeuvre un algorithme de minimisation d'un écho résiduel reposant sur un mode particulier de modification de l'intercorrélation entre les N signaux d'entrée des N voies.

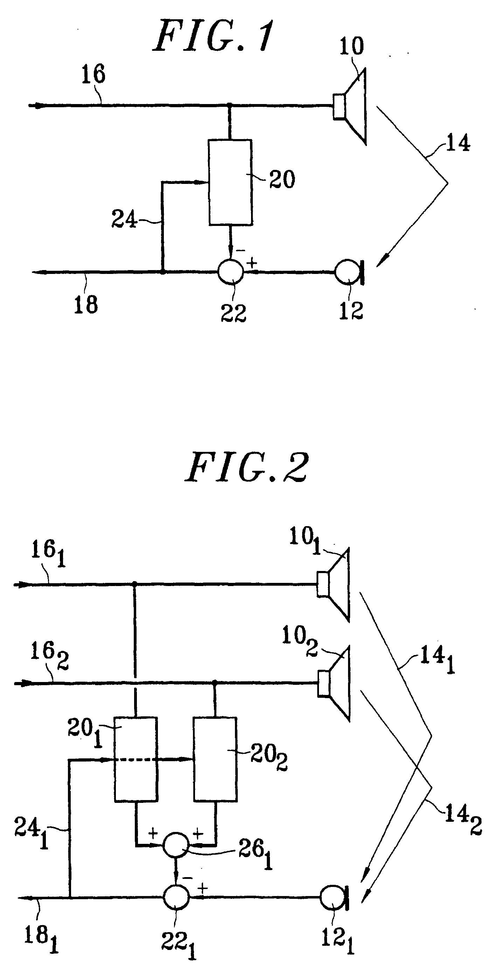

La figure 1 rappelle la structure générale d'un annuleur d'écho acoustique classique. Il est associé à un haut-parleur 10 et un microphone 12 entre lesquels il existe un chemin de couplage acoustique ou chemin d'écho 14. Les références 16 et 18 désignent respectivement le signal sonore reçu et le signal sonore émis. L'annuleur d'écho de la figure 1 comprend un filtre adaptatif 20 recevant en entrée le signal sonore reçu 16. L'objet du filtre adaptatif 20 est d'estimer par ses coefficients la réponse impulsionnelle du chemin d'écho 14, afin de soustraire l'écho du signal reçu par le microphone 12. Pour cela, la sortie du filtre adaptatif 20 est connectée à un soustracteur 22 qui soustrait le signal obtenu en sortie du filtre adaptatif 20 du signal reçu par le microphone 12. Le signal de différence obtenu en sortie du soustracteur 22 fournit une erreur d'estimation 24. Les coefficients du filtre adaptatif 20 sont ajustés au cours du temps par un algorithme approprié qui exploite l'information d'erreur d'estimation.

Le choix de cet algorithme conditionne de façon déterminante les performances de l'annuleur d'écho. Les procédés et dispositifs d'annulation d'écho connus utilisent couramment un algorithme dit du gradient stochastique normalisé, habituellement désigné par le sigle NLMS. Un inconvénient de cet algorithme est que sa vitesse de convergence dépend des caractéristiques spectrales du signal sonore reçu. Un objectif de la présente invention est de réduire cette dépendance.

Le problème de l'écho acoustique se pose bien sûr également dans les systèmes multi-voies de transmission de signaux sonores, c'est-à-dire dans les systèmes à plusieurs haut-parleurs et plusieurs microphones, par exemple deux haut-parleurs et deux microphones dans le cas de la stéréophonie.

On connaît des procédés et des dispositifs d'annulation d'écho multi-voies fondés sur le même principe que ceux d'annulation mono-voie. La figure 2 représente à titre d'exemple le schéma de principe partiel d'un annuleur d'écho acoustique stéréophonique classique, où, pour plus de clarté, on n'a représenté qu'une seule des deux voies de microphone. La structure générale peut être aisément généralisée à celle d'un annuleur d'écho acoustique à N voies de signal sonore, où N est un entier quelconque. On ne décrit dans ce qui suit que le cas N = 2. De façon analogue à l'annuleur d'écho de la figure 1, l'annuleur d'écho stéréophonique s'applique à des voies de signal sonore reçu $16_1$, $16_2$ et des voies de signal sonore émis, dont une seule, désignée par le chiffre de référence $18_1$, est représentée. L'annuleur d'écho est associé à deux haut-parleurs $10_1$, $10_2$ et deux microphones, dont un seul, désigné par le chiffre de référence $12_1$, est représenté. Il existe quatre chemins d'écho, dont deux chemins d'écho ($14_1$ et $14_2$) entre les deux haut-parleurs $10_1$, $10_2$ et le premier microphone $12_1$ et deux autres chemins d'écho (non représentés) entre les deux haut-parleurs $10_1$, $10_2$ et le second microphone. Pour estimer les réponses impulsionnelles des divers chemins d'écho, un filtre adaptatif est prévu entre chaque voie de haut-parleur et chaque voie de microphone. Ainsi, si on considère la voie du microphone $12_1$, il est prévu deux filtres adaptatifs $20_1$, $20_2$ qui reçoivent respectivement en entrée les signaux sonores reçus $16_1$ et $16_2$. Les sorties des filtres adaptatifs $20_1$, $20_2$ sont fournies en entrée à un additionneur $26_1$. Dans un annuleur d'écho à N voies où N est un entier quelconque, on prévoit un tel additionneur sur chaque voie de microphone. La somme des signaux de sortie des filtres adaptatifs fournie par l'additionneur $26_1$ est soustraite, par un soustracteur $22_1$, du signal reçu par le microphone $12_1$. La même opération est effectuée sur chaque voie de microphone. Le signal de différence obtenu en sortie du soustracteur $22_1$ fournit une erreur d'estimation $24_1$ commune à tous les filtres adaptatifs relatifs à la voie de microphone considérée ; dans l'exemple de la figure 2, l'erreur d'estimation $24_1$ est commune aux filtres adaptatifs $20_1$ et $20_2$. De même qu'en annulation d'écho mono-voies, les coefficients des filtres adaptatifs sont modifiés de façon itérative par un algorithme approprié, sur chaque voie de microphone, à partir de l'erreur d'estimation obtenue.

On a constaté, en annulation d'écho multi-voies, et en particulier en annulation d'écho stéréophonique, que la vitesse de convergence des algorithmes d'adaptation des coefficients des filtres adaptatifs était comparativement plus faible que la vitesse de convergence de ces algorithmes dans le cas de l'annulation d'écho mono-voie. Il a été montré que ce ralentissement de la convergence provient du fait que les signaux sonores reçus par les haut-parleurs, désignés par les chiffres de référence $16_1$ et $16_2$ sur la figure 2, sont mutuellement corrélés.

Le ralentissement de la convergence entraîne plusieurs inconvénients. En particulier, dans un système de téléconférence, les locuteurs situés dans la salle distante perçoivent d'autant plus longtemps l'écho de leur parole lors

## EP 0 919 096 B1

de la mise en route du système ou après une modification acoustique (mouvements des auditeurs par exemple) dans la salle où est situé l'annuleur d'écho. En outre, en annulation d'écho multi-voies, toute modification acoustique dans la salle distante perturbe la convergence des filtres adaptatifs de l'annuleur d'écho, en raison de la corrélation mutuelle, évoquée précédemment, entre les signaux de parole reçue, ce qui entraîne une réapparition ou une augmentation du niveau de l'écho.

En revanche, on a observé en pratique que lorsque des composantes non mutuellement corrélées sont présentes sur chaque signal microphonique, elles tendent à accélérer la convergence des annuleurs d'écho multi-voies. Un objectif de la présente invention est d'exploiter cette propriété des composantes mutuellement décorrélées pour améliorer les performances des annuleurs d'écho multi-voies, et améliorer par conséquent la qualité de la communication dans les systèmes de transmission de signaux sonores qui mettent en oeuvre des annuleurs d'écho multi-voies. Pour cela, le principe général de la présente invention consiste à ajouter aux voies de signal sonore reçu des signaux auxiliaires mutuellement décorrélés, rendus inaudibles par exploitation de certaines propriétés de l'audition humaine.

Plus précisément, la présente invention propose un procédé d'annulation d'écho sur N voies de signal sonore ayant chacune un haut-parleur et un microphone associés, N étant un entier supérieur ou égal à 1, suivant lequel, sur chacune des N voies :

(a) on engendre un signal synthétique ayant les caractéristiques spectrales d'un bruit blanc, le spectre de ce signal s'étendant sur plusieurs bandes de fréquence adjacentes, et ce signal synthétique étant décorrélé des signaux synthétiques engendrés sur les autres voies ;

(b) pour chaque bande de fréquence, on calcule un seuil de masquage fréquentiel correspondant au signal associé au haut-parleur de la voie considérée en utilisant des propriétés de la perception auditive humaine ;

(c) dans chaque bande de fréquence, on amène le niveau du signal synthétique à la valeur du seuil de masquage fréquentiel associé, de façon à obtenir un signal auxiliaire ;

(d) on additionne le signal auxiliaire au signal associé au haut-parleur de la voie considérée, les seuils de masquage fréquentiel ayant été précédemment calculés de façon à rendre le signal auxiliaire inaudible, et les signaux auxiliaires des N voies étant mutuellement décorrélés ;

(e) on fournit le signal obtenu précédemment en entrée à un filtre adaptatif dont les coefficients forment une estimation de la réponse impulsionnelle du chemin de couplage acoustique entre le haut-parleur et le microphone associés à la voie de signal sonore considérée ;

(f) on additionne les signaux obtenus en sortie des N filtres adaptatifs respectivement associés à chaque voie de microphone et on soustrait le signal résultant du signal reçu par le microphone associé à cette voie ;

(g) on calcule une erreur d'estimation à partir de la différence obtenue à l'issue de la soustraction précédente ;

(h) on corrige les coefficients des filtres adaptatifs associés à la voie de microphone considérée en fonction de l'erreur d'estimation associée.

Dans un mode particulier de réalisation du procédé, pour calculer chaque seuil de masquage fréquentiel,

(b1) on forme des blocs contenant chacun un nombre prédéterminé d'échantillons de signal sonore, deux blocs successifs se recouvrant mutuellement sur un nombre prédéterminé d'échantillons ;

(b2) on pondère les échantillons de chaque bloc par une fenêtre d'apodisation ;

(b3) on calcule la transformée de Fourier de chaque bloc ;

(b4) on divise le domaine des fréquences en plusieurs bandes critiques adjacentes ayant des fréquences inférieures et supérieures déterminées ;

puis, pour chaque bloc et dans chaque bande critique :

(b5) on additionne l'énergie des différentes raies spectrales appartenant à la bande critique, de façon à obtenir la valeur, pour cette bande critique, d'une fonction de répartition de l'énergie ;

(b6) on calcule le produit de convolution de la fonction de répartition de l'énergie et d'une fonction d'étalement basilaire, obtenue à partir d'une table de consultation, de façon à obtenir un spectre étalé $E_i$ ;

(b7) on calcule un indice de tonalité $\alpha_i$ à partir des énergies des raies spectrales appartenant aux différentes bandes critiques ;

(b8) on calcule un facteur de correction $O_i$ à partir de l'indice de tonalité calculé précédemment ;

(b9) on calcule un seuil de masquage fréquentiel $T_i$ à partir du spectre étalé $E_i$ et du facteur de correction $O_i$, défini comme suit :

$$10 \log_{10} T_i = 10 \log_{10} E_i - O_i - C_i$$

où $C_i$ est un paramètre supplémentaire de correction de seuil calculé à partir de plusieurs caractéristiques des

3

signaux sonores des N voies.

Dans un mode particulier de réalisation du procédé, les caractéristiques servant à calculer le paramètre supplémentaire de correction de seuil $C_i$ comprennent le niveau respectif des signaux des N voies et un ensemble de valeurs de la fonction d'intercorrélation d'au moins certaines paires de ces signaux, le paramètre supplémentaire de correction $C_i$ étant une fonction croissante des valeurs de cette fonction d'intercorrélation.

En variante, les caractéristiques servant à calculer le paramètre supplémentaire de correction de seuil $C_1$ peuvent comprendre la somme des énergies contenues dans les diverses bandes critiques de chaque voie et le rapport des énergies par bande critique d'au moins certaines paires des différentes voies, le paramètre supplémentaire de correction $C_i$ étant d'autant plus important que la somme des énergies contenues dans les diverses bandes critiques est importante et que le rapport des énergies par bande critique d'une paire de voies est peu différent entre les différentes bandes critiques.

La présente invention propose également un annuleur d'écho à N voies de signal sonore ayant chacune un haut-parleur et un microphone associés, N étant un entier supérieur ou égal à 1, comprenant :

- des moyens de calcul de signaux auxiliaires, comportant :

  des moyens de formation de blocs contenant chacun un nombre prédéterminé d'échantillons du signal sonore, deux blocs successifs se recouvrant mutuellement sur un nombre prédéterminé d'échantillons ;
  des moyens de pondération des échantillons de chaque bloc par une fenêtre d'apodisation, disposés en sortie des moyens de formation de blocs ;
  des moyens de calcul de transformée de Fourier, disposés en sortie des moyens de pondération ;
  des moyens de calcul des valeurs de fréquences inférieures et supérieures de bandes critiques adjacentes, ou une table de consultation contenant ces valeurs ;
  des moyens pour calculer une fonction de répartition de l'énergie sur les bandes critiques, la valeur, dans une bande critique donnée, de la fonction de répartition de l'énergie étant calculée en additionnant l'énergie des différentes raies spectrales appartenant à cette bande critique ;
  une seconde table de consultation, contenant des valeurs représentant des fonctions d'étalement basilaire associées chacune à une bande critique donnée ;
  des moyens pour calculer un spectre étalé $E_i$, en calculant, pour une bande critique donnée, le produit de convolution de la fonction de répartition de l'énergie et de la fonction d'étalement associées à cette bande critique ;
  des moyens de calcul d'un facteur de correction $O_i$ associé à une bande critique donnée ;
  des moyens de calcul d'un seuil de masquage fréquentiel $T_i$ associé à une bande critique donnée, à partir du spectre étalé et du facteur de correction $O_i$ associés à cette bande critique, le seuil de masquage fréquentiel $T_i$ étant défini comme suit :

  $$10 \log_{10} T_i = 10 \log_{10} E_i - O_i - C_i$$

  où Ci est un paramètre supplémentaire de correction de seuil ;
  des moyens de génération de signaux synthétiques ayant les caractéristiques spectrales d'un bruit blanc ;
  des moyens de contrôle, connectés aux N voies de signal sonore, pour calculer pour chaque bande critique le paramètre supplémentaire de correction de seuil $C_i$ à partir de plusieurs caractéristiques des signaux sonores des N voies ;
  des moyens pour amener le niveau d'un signal synthétique à la valeur du seuil de masquage fréquentiel associé, de façon à obtenir un signal auxiliaire ;
  des moyens de calcul de transformée de Fourier inverse ;
  des moyens de mémoire pour stocker le résultat du traitement des blocs successifs ;
  des moyens pour combiner le résultat du traitement d'un bloc avec le résultat du traitement du bloc précédent ;
  des moyens de lecture séquentielle reliés auxdits moyens de mémoire, pour faire passer la cadence des données de la cadence bloc à la cadence échantillon ;
  N premiers moyens additionneurs respectivement disposés sur les N voies de signal sonore, pour additionner sur chaque voie le signal sonore reçu et le signal auxiliaire associé ;

- NxN moyens de filtrage adaptatif, comprenant N moyens de filtrage adaptatif associés à chacune des N voies de microphone, et ayant chacun des coefficients qui forment une estimation de la réponse impulsionnelle du chemin de couplage acoustique entre le haut-parleur et le microphone associés à une des N voies de signal sonore ;

- des seconds moyens additionneurs, connectés en sortie des N moyens de filtrage adaptatif associés à chaque voie de microphone, pour additionner les signaux de sortie de ces N moyens de filtrage adaptatif ;
- N moyens soustracteurs, disposés chacun en sortie des seconds moyens additionneurs et connectés respectivement aux microphones des N voies de signal sonore, pour soustraire sur chaque voie le signal obtenu en sortie des seconds moyens additionneurs du signal reçu par le microphone de cette voie ;
- N moyens pour calculer sur chaque voie une erreur d'estimation à partir du résultat fourni par le moyen soustracteur connecté au microphone de cette voie ;
- N moyens pour corriger de façon itérative les coefficients respectifs des N moyens de filtrage adaptatif associés à chacune des N voies de microphone, en fonction de l'erreur d'estimation associée à chaque voie de microphone.

Les réalisations diffèrent selon les applications, et en particulier, le nombre de haut-parleurs du système de transmission de signaux sonores considéré peut être différent du nombre de microphones.

Dans un mode particulier de réalisation du dispositif, les caractéristiques servant à calculer le paramètre supplémentaire de correction de seuil $C_i$ comprennent le niveau respectif des signaux des N voies et un ensemble de valeurs de la fonction d'intercorrélation d'au moins certaines paires de ces signaux, le paramètre supplémentaire de correction $C_i$ étant une fonction croissante des valeurs de cette fonction d'intercorrélation.

En variante, les caractéristiques servant à calculer le paramètre supplémentaire de correction de seuil $C_i$ peuvent comprendre la somme des énergies contenues dans les diverses bandes critiques de chaque voie et le rapport des énergies par bande critique d'au moins certaines paires des différentes voies, le paramètre supplémentaire de correction $C_i$ étant d'autant plus important que la somme des énergies contenues dans les diverses bandes critiques est importante et que le rapport des énergies par bande critique d'une paire de voies est peu différent entre les différentes bandes critiques.

Dans un mode particulier de réalisation du dispositif, l'annuleur d'écho comprend en outre des moyens de calcul d'un indice de tonalité $\alpha_i$ à partir des énergies des raies spectrales appartenant aux différentes bandes critiques, lesdits moyens de calcul du facteur de correction $O_i$ calculant le facteur de correction $O_i$ à partir de l'indice de tonalité $\alpha_i$.

Dans un mode particulier de réalisation du dispositif, les moyens de calcul de l'indice de tonalité fournissent un indice de tonalité constant, identique pour toutes les bandes critiques et défini par :

$$\alpha_i = \alpha = \min(\text{SFM}/\text{SFM}_{max}, 1) \qquad\qquad 1)$$

où $\min(a, b)$ désigne la plus petite des valeurs a et b,

où $\text{SFM}_{max}$ est un paramètre de valeur prédéterminée en dB associé à un signal sinusoïdal pur, et

où $\text{SFM} = 10 \log_{10} G/A$, où $\log_{10}$ désigne le logarithme décimal, G désigne la moyenne géométrique de l'énergie sur un nombre prédéterminé de points de la transformée de Fourier et A désigne sa moyenne arithmétique sur le même nombre de points.

Dans un mode particulier de réalisation, $\text{SFM}_{max} = -60$ dB.

Dans un mode particulier de réalisation, les moyens de calcul du facteur de correction $O_i$ fournissent un facteur de correction $O_i$ défini par :

$$O_i = \max (SO, \alpha_i \cdot (k_1 + B_i) + (1 - \alpha_i) \cdot k_2)$$

où $\max(a, b)$ désigne la plus grande des valeurs a et b,

où $SO$, $k_1$ et $k_2$ sont des paramètres de valeur prédéterminée en dB,

où $\alpha_i$ est l'indice de tonalité associé à la bande critique considérée, et

où $B_i$ désigne la fréquence de la bande critique en Bark.

Dans un mode particulier de réalisation du dispositif, $SO = 24,5$ dB, $k_1 = 14,5$ dB et $k_2 = 5,5$ dB.

D'autres caractéristiques et avantages de la présente invention apparaîtront à la lecture de la description détaillée qui suit de modes particuliers de réalisation, donnés à titre d'exemples non limitatifs. La description se réfère aux dessins annexés, dans lesquels :

- la figure 1, relative à l'art antérieur et décrite en introduction, est une représentation schématique d'un annuleur d'écho acoustique mono-voie classique ;
- la figure 2, également relative à l'art antérieur et décrite en introduction, est une représentation schématique partielle d'un annuleur d'écho acoustique stéréophonique classique, où une seule voie de microphone est représentée ;

- la figure 3 est un organigramme décrivant la succession générale des étapes du procédé de la présente invention dans un mode particulier de réalisation ;
- la figure 4 représente de façon schématique le dispositif de la présente invention dans un mode particulier de réalisation ;
- la figure 5 représente de façon schématique la structure du module de calcul de signaux auxiliaires compris dans le dispositif de la présente invention, dans un mode particulier de réalisation ;
- la figure 6a est un graphe illustrant un premier exemple d'évolution au cours du temps de l'écart relatif entre les réponses impulsionnelles réelles des chemins de couplage acoustique et les réponses impulsionnelles estimées par les filtres adaptatifs d'un annuleur d'écho stéréophonique conforme à un mode particulier de réalisation de la présente invention ;
- la figure 6b est un graphe analogue à celui de la figure 6a, établi pour un annuleur d'écho stéréophonique classique ;
- la figure 7a est un graphe illustrant un deuxième exemple d'évolution au cours du temps de l'écart relatif entre les réponses impulsionnelles réelles des chemins de couplage acoustique et les réponses impulsionnelles estimées par les filtres adaptatifs d'un annuleur d'écho stéréophonique conforme à un mode particulier de réalisation de la présente invention ;
- la figure 7b est un graphe analogue à celui de la figure 7a, établi pour un annuleur d'écho stéréophonique classique.

Le procédé et le dispositif de la présente invention s'appliquent à un signal sonore quelconque. A titre d'exemple non limitatif, il peut s'agir aussi bien d'un signal de parole que de musique.

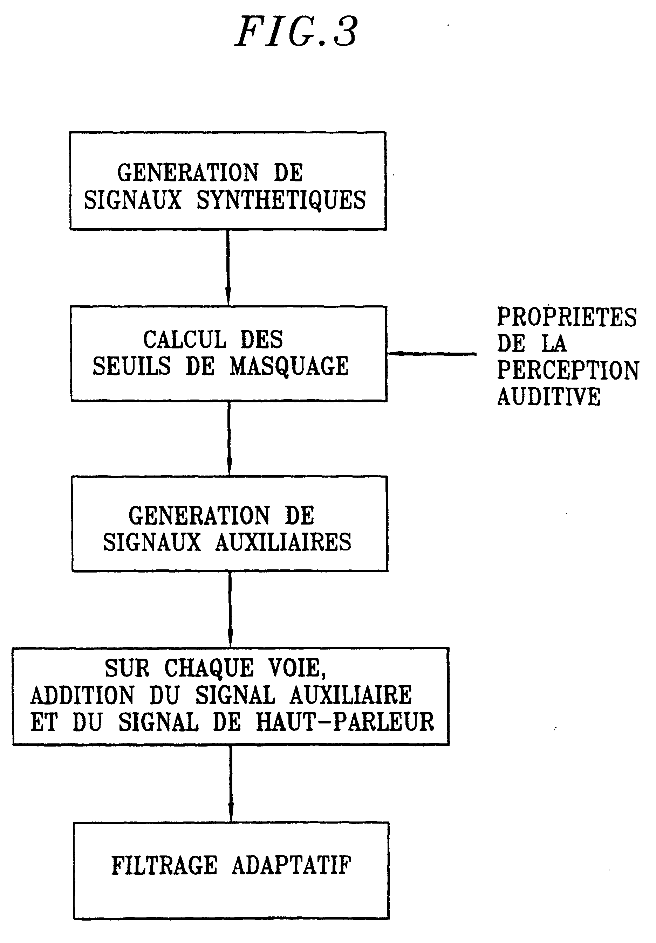

On va d'abord décrire l'organisation générale du procédé d'annulation d'écho multi-voies dans un mode particulier de réalisation, à l'aide de la figure 3.

On considère N voies de signal sonore dont chacune comporte un haut-parleur et un microphone.

Sur chaque voie de signal sonore reçu, on synthétise tout d'abord un signal ayant les caractéristiques spectrales d'un bruit blanc et dont le spectre s'étend sur plusieurs bandes de fréquence adjacentes, les signaux synthétiques des N voies étant mutuellement décorrélés.

Ensuite, pour chaque bande de fréquence, on calcule un seuil de masquage fréquentiel correspondant au signal sonore reçu par le haut-parleur de la voie considérée.

On rappelle que l'effet de masquage consiste en ce qu'un son en présence d'un autre peut devenir partiellement ou complètement inaudible. Lorsque ce phénomène se produit dans le domaine fréquentiel, on parle de masquage simultané ou masquage fréquentiel. Il existe un seuil, appelé seuil de masquage fréquentiel, en deçà duquel toutes les composantes fréquentielles d'un son masqué sont inaudibles. Pour plus de détail sur le phénomène de masquage, on se reportera utilement à l'ouvrage de E. ZWICKER et R. FELDTKELLER intitulé "Das Ohr als Nachrichtenempfänger", Stuttgart, West Germany, Hirzel Verlag, 1967.

Dans un mode particulier de réalisation, le calcul des seuils de masquage fréquentiel s'effectue comme suit. Tout d'abord, on transforme la cadence du flot de données de signal sonore en passant d'une cadence d'échantillons, par exemple de 16 kHz, à une cadence de blocs, par exemple chacun d'une durée de 32 ms. Chaque bloc contient donc un nombre prédéterminé d'échantillons. Deux blocs successifs se recouvrent mutuellement sur un nombre prédéterminé d'échantillons, par exemple sur une durée de 16 ms.

Ensuite, pour améliorer l'estimation ultérieure du spectre, on pondère les échantillons de chaque bloc par une fenêtre d'apodisation, par exemple du type fenêtre de Hamming ou de Hanning.

Puis on calcule la transformée de Fourier de chaque bloc sur un nombre prédéterminé de points, par exemple 512 points pour des blocs de 32 ms. On peut utiliser à cet effet un algorithme de transformée de Fourier rapide.

On divise ensuite le domaine des fréquences auquel le signal sonore reçu est susceptible d'appartenir en plusieurs bandes de fréquences adjacentes ayant des fréquences inférieures et supérieures déterminées. Ces bandes de fréquences sont appelées bandes critiques. Le tableau ci-dessous fournit, à titre d'exemple non limitatif, la décomposition du domaine des fréquences de la parole en bandes critiques (bornes inférieures et supérieures et fréquences centrales) établie par E. ZWICKER et R. FELDTKELLER et figurant dans l'ouvrage précité. La largeur de chaque bande critique est par convention égale à 1 Bark. Le tableau donne donc la correspondance entre l'échelle fréquentielle des Hertz et celle des Bark.

| Bande critique n° | Borne inférieure (Hz) | Centre (Hz) | Borne supérieure (Hz) |
|---|---|---|---|
| 1 | 0 | 50 | 100 |
| 2 | 100 | 150 | 200 |

(suite)

| Bande critique n° | Borne inférieure (Hz) | Centre (Hz) | Borne supérieure (Hz) |
|---|---|---|---|
| 3 | 200 | 250 | 300 |
| 4 | 300 | 350 | 400 |
| 5 | 400 | 450 | 510 |
| 6 | 510 | 570 | 630 |
| 7 | 630 | 700 | 770 |
| 8 | 770 | 840 | 920 |
| 9 | 920 | 1000 | 1080 |
| 10 | 1080 | 1170 | 1270 |
| 11 | 1270 | 1370 | 1480 |
| 12 | 1480 | 1600 | 1720 |
| 13 | 1720 | 1850 | 2000 |
| 14 | 2000 | 2150 | 2320 |
| 15 | 2320 | 2500 | 2700 |
| 16 | 2700 | 2900 | 3150 |
| 17 | 3150 | 3400 | 3700 |
| 18 | 3700 | 4000 | 4400 |
| 19 | 4400 | 4800 | 5300 |
| 20 | 5300 | 5800 | 6400 |
| 21 | 6400 | 7000 | 7700 |
| 22 | 7700 | 8500 | 9500 |
| 23 | 9500 | 10500 | 12000 |
| 24 | 12000 | 13500 | 15500 |

Au lieu d'appliquer une transformée de Fourier comme décrit ci-dessus, on peut, en variante, utiliser une décomposition par bancs de filtres, ce qui permet d'obtenir directement la décomposition en bandes critiques.

L'étape suivante consiste à additionner l'énergie des différentes raies spectrales appartenant à chaque bande critique, de façon à obtenir la valeur, dans cette bande critique, d'une fonction de répartition de l'énergie.

On calcule ensuite le spectre étalé $E_i$, défini comme le produit de convolution de la fonction de répartition de l'énergie par bande critique avec la fonction dite d'étalement basilaire. La fonction d'étalement basilaire $E_b$ correspond à la réponse fréquentielle en énergie de la membrane basilaire de l'oreille humaine. Elle représente l'excitation résultant de la perception d'une tonale, c'est-à-dire d'un son de fréquence pure, et peut être définie par l'équation suivante, figurant également dans l'ouvrage précité de E. ZWICKER et R. FELDTKELLER :

$$10.\log_{10} E_b = 15{,}81+7{,}5.(B+0{,}474)-17{,}5.(1+(B+0{,}474)^2)^{1/2}$$

où $\log_{10}$ représente le logarithme décimal et B est la fréquence en Bark. Dans le mode particulier de réalisation décrit, les valeurs de cette fonction sont lues dans une table de consultation.

On a montré expérimentalement qu'il est plus difficile de masquer un bruit par une tonale que l'inverse. Pour tenir compte de cette asymétrie des seuils de masquage, on applique à chaque seuil un facteur de correction $O_i$ associé à une bande critique donnée $B_i$ et qui dépend de l'aspect tonal ou non tonal du signal sonore. Pour évaluer cet aspect tonal ou non tonal, on utilise, dans un mode particulier de réalisation, une mesure notée SFM (en anglais Spectral Flatness Measure), définie comme le rapport entre la moyenne géométrique de l'énergie sur un nombre prédéterminé de points de la transformée de Fourier et sa moyenne arithmétique sur le même nombre de points, par exemple 256 points pour une transformée de Fourier calculée sur 512 points.

La valeur SFM obtenue est comparée à celle d'un signal sinusoïdal pur, pour lequel, à titre d'exemple non limitatif, on peut poser par convention SFM = $SFM_{max}$ = - 60 dB.

On calcule alors un indice de tonalité $\alpha_i$, qui, dans un mode particulier de réalisation, est constant et identique pour toutes les bandes critiques et défini par :

$$\alpha_i = \alpha = \min (SFM/SFM_{max}, 1)$$

où min (a, b) désigne la plus petite des valeurs a et b. L'indice $\alpha_i$ est compris entre 0 et 1 et est plus élevé pour les composantes tonales du signal que pour les composantes non tonales. Toute autre méthode de calcul de l'indice de tonalité jugée appropriée est envisageable.

Le facteur de correction $O_i$ associé à la bande critique de fréquence $B_i$ en Bark est défini à partir de l'indice de tonalité $\alpha_i$ comme suit :

$$O_i = \max (SO, \alpha_i.(k_1 + B_i) + (1 - \alpha_i).k_2)$$

où max (a, b) désigne la plus grande des valeurs a et b et où SO, $k_1$ et $k_2$ sont des paramètres de valeur prédéterminée en dB. Typiquement, on peut choisir SO = 24,5 dB, $k_1$ = 14,5 dB et $k_2$ = 5,5 dB.

Le facteur de correction $O_i$ est une fonction croissante du rang de la bande critique dans le cas de composantes tonales dominantes et accorde plus de poids à celles-ci qu'aux composantes non tonales.

On applique en outre aux seuils de masquage un paramètre supplémentaire de correction $C_i$ calculé à partir de plusieurs caractéristiques des signaux sonores des N voies. Le paramètre $C_i$ peut être commun à tous les seuils de masquage correspondant aux différentes bandes critiques, ou bien avoir une valeur spécifique pour chaque bande critique.

Dans un mode particulier de réalisation, on calcule le paramètre supplémentaire de correction de seuil $C_i$ à partir des niveaux des signaux sonores reçus sur les N voies et d'un ensemble de valeurs de la fonction d'intercorrélation d'au moins certaines paires de ces signaux. Dans ce mode particulier de réalisation, le paramètre supplémentaire de correction de seuil $C_i$ est une fonction croissante des valeurs de la fonction d'intercorrélation.

A titre d'exemple non limitatif, dans une installation pratique typique de téléconférence à plusieurs microphones et plusieurs haut-parleurs, les microphones sont disposés de telle sorte que la corrélation entre signaux captés est importante entre deux microphones adjacents et faible entre microphones distants. Cette corrélation variable se retrouve, moyennant des modifications éventuelles dues aux traitements durant la transmission, à la réception, entre les voies adjacentes d'une part, à savoir, entre deux haut-parleurs directement voisins, et entre les voies distantes d'autre part, à savoir, entre les autres paires de haut-parleurs distants.

Ainsi, on peut se limiter à utiliser, pour le calcul des paramètres $C_i$, les caractéristiques de niveau et d'intercorrélation des paires de voies correspondant aux paires de haut-parleurs directement voisins et aux deux paires adjacentes (si ces dernières existent, compte tenu du nombre total de haut-parleurs). Ainsi, si on considère une paire de haut-parleurs directement voisins ($HP_k$, $HP_{k+1}$), on utilisera leurs caractéristiques de niveau et d'intercorrélation ainsi que celles des paires adjacentes ($HP_{k-1}$, $HP_k$) ($HP_{k-1}$ et $HP_k$ étant directement voisins) et ($HP_{k+1}$, $HP_{k+2}$) ($HP_{k+1}$ et $HP_{k+2}$ étant directement voisins).

Dans un autre mode de réalisation, on calcule le paramètre supplémentaire de correction $C_i$ à partir de la somme des énergies contenues dans les diverses bandes critiques de chaque voie et le rapport des énergies par bande critique d'au moins certaines paires des différentes voies.

De façon analogue au mode de réalisation précédent, on peut se limiter à utiliser les caractéristiques de somme et de rapport d'énergie des paires de voies correspondant aux paires de haut-parleurs directement voisins et aux deux paires adjacentes. Le paramètre $C_i$ est d'autant plus important que la somme des énergies contenues dans les diverses bandes critiques est importante et que le rapport des énergies par bande critique d'une paire de voies est peu différent entre les différentes bandes critiques.

Ainsi, lorsque l'intercorrélation entre les signaux sonores de deux voies données est forte, et/ou que ces deux signaux ont des énergies comparables, le paramètre $C_i$ est élevé, c'est-à-dire qu'une réduction importante du seuil est appliquée, typiquement de 6 à 10 dB. A l'inverse, lorsque les signaux sont peu corrélés et/ou sont d'énergies sensiblement différentes, une réduction moins importante du seuil est appliquée, typiquement de 0 à 6 dB. Cette correction tient compte des propriétés de l'audition. Elle a pour but de rendre inaudibles les signaux auxiliaires mentionnés en introduction et dont l'obtention est détaillée ci-après, tout en permettant de leur donner le niveau le plus élevé possible.

Pour chaque bloc et dans chaque bande critique, on obtient le seuil de masquage fréquentiel $T_i$ à partir du spectre étalé $E_i$ et du facteur de correction $O_i$ définis précédemment, et du paramètre supplémentaire de correction de seuil $C_i$, comme suit :

$$10 \log_{10} T_i = 10 \log_{10} E_i - O_i - C_i$$

Comme le montre la figure 3, l'étape suivante du procédé consiste à obtenir, sur chaque voie, un signal auxiliaire. Pour cela, dans un mode particulier de réalisation, on amène dans chaque bande critique le niveau du signal synthétique à la valeur du seuil de masquage fréquentiel associé.

On calcule ensuite la transformée de Fourier inverse correspondant au résultat du traitement du bloc courant, par exemple au moyen d'un algorithme de transformée de Fourier inverse rapide. Dans le cas où on n'a pas utilisé une transformée de Fourier, mais une décomposition par bancs de filtres, comme décrit précédemment, on effectue, au lieu d'une transformation de Fourier inverse, une étape de synthèse correspondant à une transformation inverse de la décomposition par bancs de filtres.

On combine ensuite le résultat du traitement des blocs précédents avec le résultat du traitement du bloc courant, afin de reconstruire le bloc de bruit masqué courant, par exemple au moyen d'un procédé connu de synthèse par recouvrement et addition (en anglais "overlap-add") ou par recouvrement et sauvegarde (en anglais "overlap-save").

On repasse ensuite de la cadence de blocs à la cadence d'échantillons.

L'ensemble des traitements décrits précédemment peut être effectué par un processeur de traitement de signal en temps réel.

Dans un mode particulier de réalisation, l'étape suivante du procédé consiste, sur chaque voie, à additionner le signal auxiliaire obtenu au signal associé au haut-parleur de cette voie, comme l'indique la figure 3. Par construction, les signaux auxiliaires des N voies sont mutuellement décorrélés et, du fait que les signaux auxiliaires ne dépassent pas les seuils de masquage fréquentiel associés, ils sont inaudibles.

Dans le mode de réalisation décrit, chaque signal auxiliaire est additionné au signal de haut-parleur associé après avoir été reconstitué dans sa totalité à partir des différentes bandes critiques. En variante, cette addition peut tout aussi bien être effectuée dans chacune des différentes bandes critiques.

On effectue ensuite une étape globale de filtrage adaptatif, comme l'indique la figure 3. Cette étape est détaillée ci-dessous dans un mode particulier de réalisation.

On fournit tout d'abord la somme du signal auxiliaire et du signal de haut-parleur en entrée à un filtre adaptatif dont les coefficients forment une estimation de la réponse impulsionnelle du chemin de couplage acoustique entre le haut-parleur et le microphone associés à la voie de signal sonore considérée.

On procède ainsi sur chaque voie, puis on additionne les signaux obtenus en sortie des N filtres adaptatifs associés à chaque voie de microphone. On soustrait ensuite le signal résultant, sur chaque voie de microphone, du signal reçu par le microphone associé à cette voie.

A partir du signal de différence ainsi obtenu, on calcule sur chaque voie de microphone une erreur d'estimation et on corrige les coefficients des filtres adaptatifs associés à cette voie de microphone en fonction de cette erreur d'estimation.

L'étape de filtrage adaptatif détaillée ci-dessus est réalisée dans le domaine temporel. En variante, on peut réaliser le filtrage adaptatif par blocs et non par échantillons, en particulier en effectuant l'ensemble des traitements correspondants dans le domaine de Fourier. Pour une description de procédés de filtrage adaptatif fréquentiel, on se reportera utilement à l'article de J. PRADO et E. MOULINES intitulé "Frequency domain adaptative filtering with applications to acoustic echo cancellation", Annales des Télécommunications, 49, n° 7-8, 1994, pages 414-428.

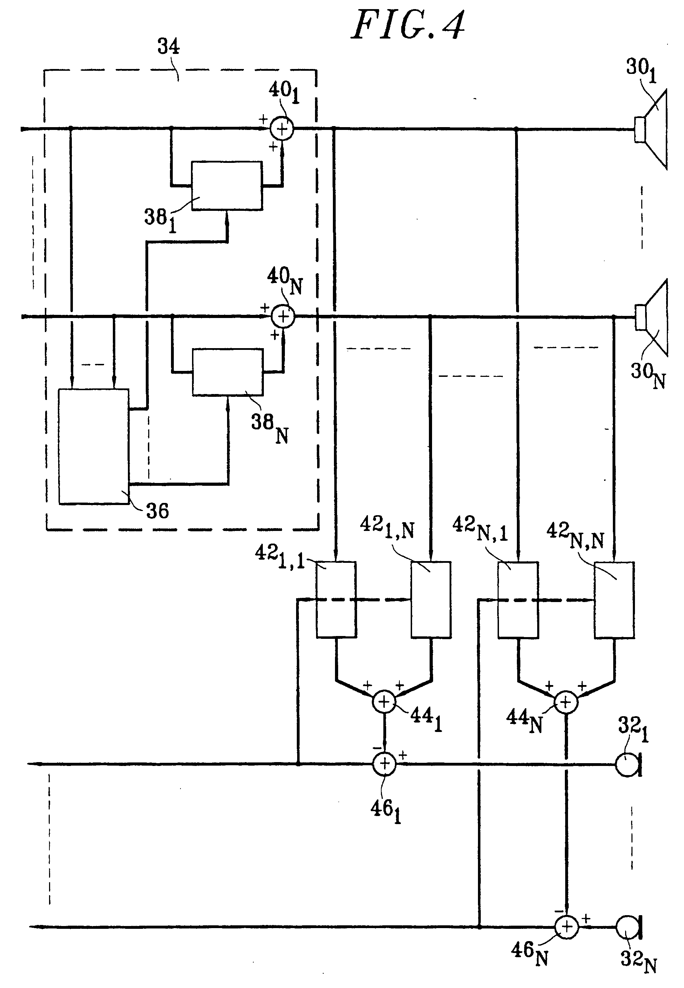

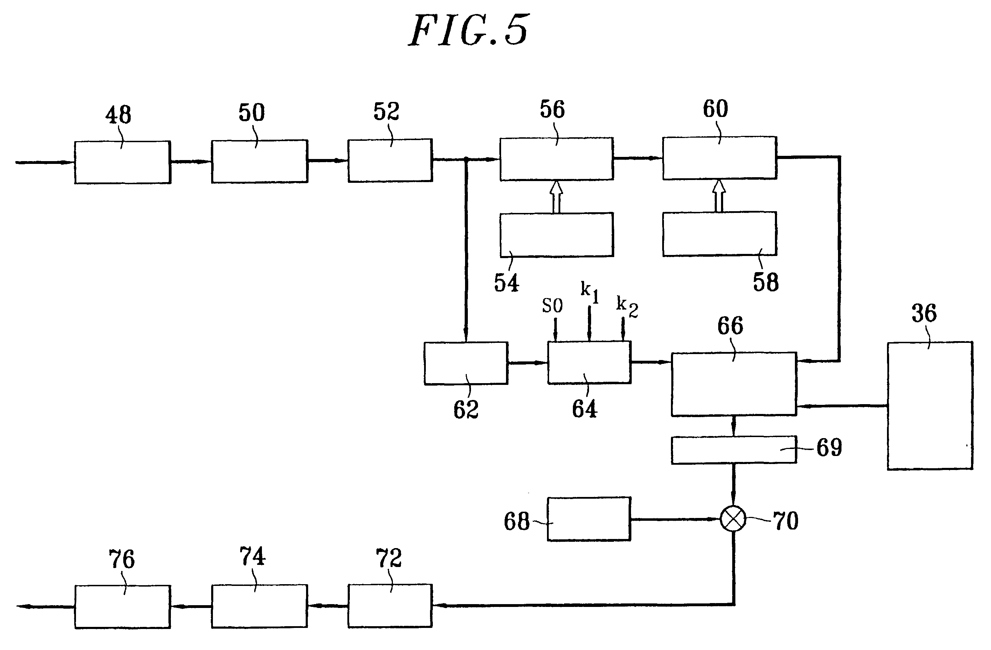

On décrit dans ce qui suit un mode particulier de réalisation d'un annuleur d'écho conforme à la présente invention, à l'aide des figures 4 et 5.

Dans ce mode particulier de réalisation, le nombre de haut-parleurs est identique au nombre de microphones. Cependant, diverses réalisations sont possibles selon les applications, et en particulier, le nombre de haut-parleurs peut être différent du nombre de microphones.

Comme le montre la figure 4, l'annuleur d'écho est associé à N haut-parleurs $30_1$, ..., $30_N$ et N microphones $32_1$, ..., $32_N$. Il comprend un module 34 de calcul de signaux auxiliaires dont la structure détaillée sera décrite à l'aide de la figure 5. De façon globale, le module 34 de calcul de signaux auxiliaires comprend un module de contrôle 36 connecté aux N voies de haut-parleur, N modules $38_1$, ...., $38_N$ de production de signaux auxiliaires respectivement connectés aux N voies de haut-parleur et au module de contrôle 36, et N premiers modules additionneurs $40_1$, ..., $40_N$ respectivement disposés sur les N voies de haut-parleur et recevant chacun en entrée le signal sonore reçu sur la voie considérée et le signal de sortie du module de production de signaux auxiliaires associé à cette voie.

L'annuleur d'écho représenté sur la figure 4 comprend en outre N x N modules de filtrage adaptatif $42_{i,j}$ où i et j sont des entiers variant de 1 à N, les N modules de filtrage adaptatif $42_{i,1}$, ..., $42_{i,N}$ étant associés à la ième voie de microphone, $1 \leq i \leq N$, et étant respectivement associés aux N voies de haut-parleur, comme le montre la figure 4. Pour la ième voie de microphone, $1 \leq i \leq N$, les sorties des N modules de filtrage adaptatif $42_{i,1}$, ..., $42_{i,N}$ sont connectées à un second module additionneur $44_i$. La sortie de chaque second module additionneur $44_i$, $1 \leq i \leq N$, est connectée à l'entrée soustractrice d'un module soustracteur $46_i$ recevant sur son entrée non soustractrice le signal reçu par le ième microphone $32_i$. La sortie de chaque module soustracteur $46_i$ commande l'ensemble des N modules de filtrage adaptatif $42_{i,1}$, ..., $42_{i,N}$, par l'intermédiaire d'un module (non représenté) permettant de calculer une erreur d'estimation à partir du résultat fourni par le module soustracteur $46_i$, et par l'intermédiaire d'un module (non représenté) pour corriger de façon itérative les coefficients des N modules de filtrage adaptatif $42_{i.1}$, ..., $42_{i.N}$, en fonction de l'erreur d'estimation obtenue.

La figure 5 représente plus en détail la structure du sous-ensemble du module 34 de calcul de signaux auxiliaires formé par le module de contrôle 36 et les N modules $38_1$, ..., $38_N$ de production de signaux auxiliaires.

Le signal sonore reçu sur une voie de haut-parleur donnée est fourni en entrée à un module 48 de formation de blocs. Le module 48 fournit en sortie des blocs contenant chacun un nombre prédéterminé d'échantillons du signal sonore reçu. Deux blocs successifs se recouvrent mutuellement sur un nombre prédéterminé d'échantillons. Les exemples numériques donnés dans la description d'un mode particulier de réalisation du procédé restent valables.

Le module 48 de formation de blocs est connecté à un module de pondération 50 qui applique à chaque bloc une fenêtre d'apodisation, par exemple du type fenêtre de Hamming ou de Hanning.

Le module de pondération 50 est connecté à un module 52 de calcul de transformée de Fourier. A titre d'exemple non limitatif, le module 52 peut effectuer une transformée de Fourier rapide sur 512 points.

Le module 34 de calcul de signaux auxiliaires comprend également un module 54 de calcul des valeurs des fréquences inférieures et supérieures de bandes critiques adjacentes couvrant le domaine de fréquences auquel appartient le signal sonore reçu. En variante, le module 54 peut consister en une table de consultation contenant ces valeurs.

Le module 54 est connecté à un module 56 de calcul de fonctions de répartition de l'énergie. L'entrée du module 56 est également connectée au module 52 de calcul de transformée de Fourier. Le module 56 calcule et additionne l'énergie des différentes raies spectrales appartenant à chaque bande critique en utilisant les valeurs des fréquences limites des bandes critiques fournies par le module 54. Le module 56 fournit en sortie, pour chaque bande critique, la valeur d'une fonction de répartition de l'énergie.

Une seconde table de consultation 58 contient des valeurs représentant des fonctions d'étalement basilaire associées chacune à une bande critique donnée. La définition de ces fonctions a été donnée plus haut en relation avec un mode particulier de réalisation du procédé.

La seconde table de consultation 58 est connectée à l'entrée d'un module 60 permettant de calculer un spectre étalé $E_i$. L'entrée du module 60 est également connectée au module 56 de calcul de fonctions de répartition de l'énergie. Le module 60 calcule, pour une bande critique donnée, le produit de convolution de la fonction de répartition de l'énergie et de la fonction d'étalement, de façon à fournir en sortie le spectre étalé pour cette bande critique.

Dans le mode particulier de réalisation représenté sur la figure 5, le module 34 de calcul de signaux auxiliaires comprend en outre un module 62 de calcul d'indices de tonalité $\alpha_i$ respectivement associés à des bandes critiques données. Le module 62 est connecté en sortie du module 52 de calcul de transformée de Fourier et utilise les valeurs des énergies des raies spectrales appartenant aux différentes bandes critiques.

Dans ce mode particulier de réalisation, le module 62 de calcul d'indices de tonalité est connecté à un module 64 de calcul de facteurs de correction $O_i$ respectivement associés à des bandes critiques données. Le module 64 calcule les facteurs de correction $O_i$ à partir des indices de tonalité $\alpha_i$.

Dans un mode particulier de réalisation, le module 62 de calcul d'indices de tonalité fournit un indice de tonalité $\alpha_i$ constant, identique pour toutes les bandes critiques, défini par :

$$\alpha_i = \alpha = min(SFM/SFM_{max}, 1)$$

où min(a, b) désigne la plus petite des valeurs a et b,
où $SFM_{max}$ est un paramètre de valeur prédéterminée en dB associé à un signal sinusoïdal pur, et
où $SFM = 10 \log_{10} G/A$, où $\log_{10}$ désigne le logarithme décimal, G désigne la moyenne géométrique de l'énergie sur un nombre prédéterminé de points de la transformée de Fourier et A désigne sa moyenne arithmétique sur le même nombre de points. Dans ce mode de réalisation, le module 64 de calcul de facteurs de correction $O_i$ fournit en sortie pour chaque bande critique un facteur de correction $O_i$ défini par :

$$O_i = max (SO, \alpha_i. (k_1 + B_i) + (1 - \alpha_i).k_2)$$

où max(a, b) désigne la plus grande des valeurs a et b,
où SO, $k_1$ et $k_2$ sont des paramètres de valeur prédéterminée en dB,
où $\alpha_i$ est l'indice de tonalité associé à la bande critique considérée, et
où $B_i$ désigne la fréquence de la bande critique en Bark.
A titre d'exemple non limitatif, les paramètres $SFM_{max}$, SO, $k_1$ et $k_2$ peuvent avoir les valeurs numériques indiquées plus haut en relation avec un mode particulier de réalisation du procédé.

Le module 64 de calcul de facteurs de correction $O_i$ et le module 60 de calcul de spectres étalés sont connectés à l'entrée d'un module 66 de calcul de seuils de masquage fréquentiel $T_i$ respectivement associés à des bandes critiques données. Le module 66 fournit en sortie pour chaque bande critique un seuil de masquage fréquentiel $T_i$ défini comme suit :

$$10 \log_{10} T_i = 10 \log_{10} E_i - O_i - C_i$$

où $E_i$ est le spectre étalé et $O_i$ le facteur de correction associés à cette bande critique, et où $C_i$ est un paramètre supplémentaire de correction de seuil.

Le paramètre $C_i$ est fourni par le module de contrôle 36 mentionné plus haut. Les connexions du module 36 aux N voies de haut-parleur, représentées sur la figure 4, ont été omises sur la figure 5 pour plus de clarté.

Dans un mode particulier de réalisation, le module de contrôle 36 calcule le paramètre supplémentaire de correction de seuil $C_i$ pour chaque bande critique à partir du niveau respectif des signaux des N voies et d'un ensemble de valeurs de la fonction d'intercorrélation d'au moins certaines paires de ces signaux, comme on l'a décrit plus haut en relation avec un mode particulier de réalisation du procédé. On a vu que dans ce cas, le paramètre $C_i$ est une fonction croissante des valeurs de la fonction d'intercorrélation.

Dans un autre mode particulier de réalisation, le module de contrôle 36 calcule le paramètre $C_i$ pour chaque bande critique à partir de la somme des énergies contenues dans les diverses bandes critiques de chaque voie et du rapport des énergies par bande critique d'au moins certaines paires des différentes voies, comme on l'a également décrit en relation avec un mode particulier de réalisation du procédé. On a vu que dans ce cas, le paramètre $C_i$ est d'autant plus important que la somme des énergies contenues dans les diverses bandes critiques est importante et que le rapport des énergies par bande critique d'une paire de voies est peu différent entre les différentes bandes critiques.

Le module 34 de calcul de signaux auxiliaires comporte de plus un module 68 de génération de signaux synthétiques. Le module produit, pour chaque voie de signal sonore, un signal ayant les caractéristiques spectrales d'un bruit blanc et décorrélé des signaux synthétiques produits pour les autres voies.

La sortie du module 66 de calcul de seuils de masquage fréquentiel est connectée à un module de conversion fréquentielle 69. Le module 69 effectue la conversion des seuils de masquage fournis par le module 66 de Bark en Hertz.

Un module 70 reçoit en entrée les signaux synthétiques produits par le module 68 et les seuils de masquage fréquentiel calculés par le module 66 et convertis par le module 69. Le module 70 amène le niveau de chaque signal synthétique à la valeur du seuil de masquage fréquentiel associé, de façon à obtenir un signal auxiliaire.

La sortie du module 70 est connectée à l'entrée d'un module 72 de calcul de transformée de Fourier inverse.

La sortie du module 72 est connectée à l'entrée d'un module de synthèse 74. Le module de synthèse 74 est connecté à une mémoire vive (non représentée) qui stocke le résultat du traitement des blocs d'échantillons successifs. Le module de synthèse 74 combine le résultat du traitement d'un bloc avec le résultat du traitement du bloc précédent fourni par la mémoire vive, par exemple en mettant en oeuvre un procédé de synthèse par recouvrement et addition (en anglais "overlap-add") ou recouvrement et sauvegarde (en anglais "overlap-save").

Un module 76 de lecture séquentielle est connecté au module de synthèse 74 et à la mémoire vive, et assure le passage de la cadence des données de la cadence de blocs à une cadence d'échantillons.

L'ensemble des modules 48 à 76 qui viennent d'être décrits est équivalent à la série de modules $38_1$, ..., $38_N$ de production de signaux auxiliaires représentés de façon simplifiée sur la figure 4. En effet, chacun des modules 48 à 76 contribue à produire un signal auxiliaire pour chaque voie de haut-parleur.

Ainsi, la présente invention permet d'injecter à chaque instant sur chaque voie de signal sonore reçu un signal auxiliaire de niveau maximal, assurant efficacement l'accroissement de la vitesse de convergence, et dont le niveau est rendu par construction inférieur au seuil de masquage par le signal sonore reçu.

Le procédé et le dispositif de la présente invention s'appliquent également en annulation d'écho mono-voie (cas N = 1), pour améliorer la convergence du filtre adaptatif.

Ils sont applicables à tous les types d'annulation d'écho acoustique, en particulier aussi bien dans le domaine temporel que dans le domaine fréquentiel, ou encore en sous-bandes.

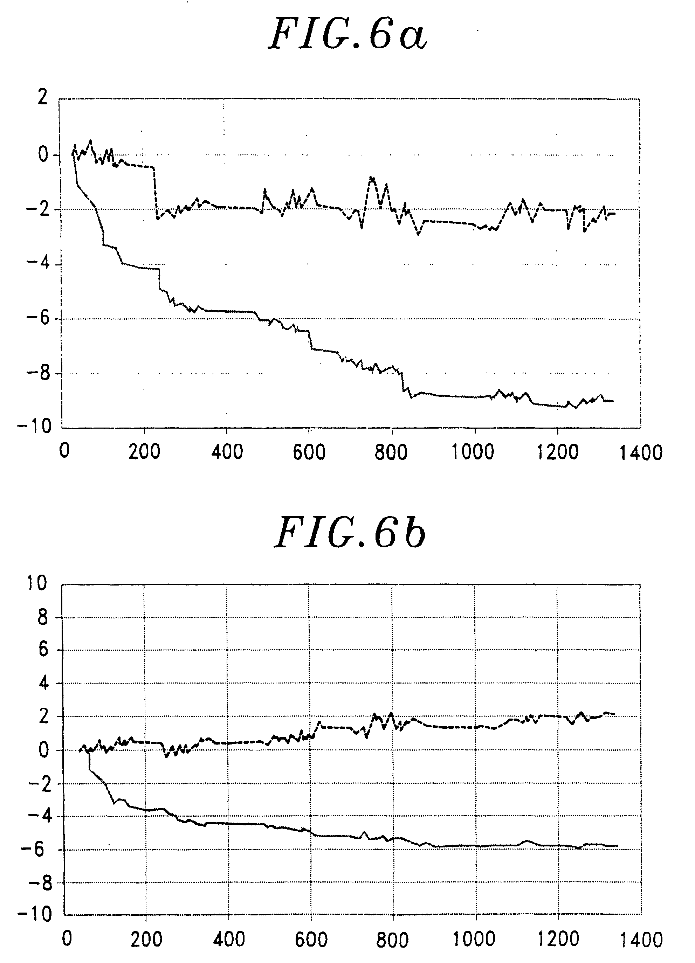

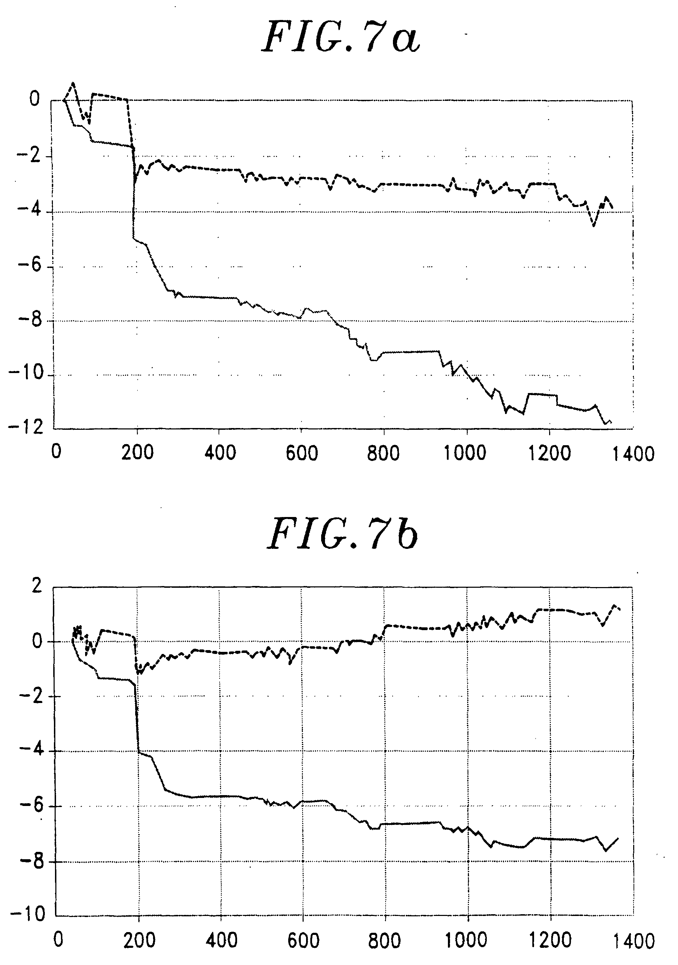

Les figures 6a, 6b et 7a, 7b illustrent deux exemples de résultats comparatifs obtenus à l'aide du procédé et du dispositif d'annulation d'écho conformes à un mode particulier de réalisation de la présente invention.

Les graphes des figures 6a à 7b comprennent tous deux courbes. Les courbes en tirets concernent la voie stéréophonique droite et les courbes en pointillés concernent la voie stéréophonique gauche. L'algorithme utilisé pour l'adaptation des coefficients des filtres adaptatifs est l'algorithme du gradient stochastique normalisé (NLMS). Les filtres adaptatifs ont une taille de 1024 coefficients. L'axe des abscisses représente le nombre d'itérations de l'algorithme d'adaptation, divisé par un facteur 256. L'axe des ordonnées représente l'écart relatif, en dB, entre les réponses impulsionnelles réelles des chemins de couplage acoustique et les réponses impulsionnelles des filtres adaptatifs d'un annuleur d'écho stéréophonique.

Le premier exemple comparatif, illustré par les figures 6a et 6b, correspond à un locuteur masculin. Le pas d'adaptation de l'algorithme NLMS est de 0,25. La figure 6a montre l'écart relatif obtenu en utilisant la présente invention et la figure 6b montre l'écart relatif obtenu en utilisant un procédé et un dispositif classiques d'annulation d'écho, ne faisant notamment pas intervenir de signaux auxiliaires.

Le deuxième exemple comparatif, illustré par les figures 7a et 7b, correspond à un locuteur féminin. Le pas d'adaptation de l'algorithme NLMS est de 0,125. Les figures 7a et 7b sont les analogues respectifs des figures 6a et 6b.

Dans les deux exemples comparatifs, l'utilisation de la présente invention assure toujours un écart relatif inférieur à 1 (c'est-à-dire négatif en dB), ce qui n'est pas le cas du procédé et du dispositif classiques pour la voie droite (courbes en tirets). De plus, dans les cas d'utilisation de la présente invention, l'écart sur la voie gauche (courbes en pointillés) est inférieur de plusieurs dB à l'écart observé sur les courbes correspondant au procédé et au dispositif classiques. La présente invention présente donc des performances supérieures, permettant de garantir un bon comportement de poursuite de l'annuleur d'écho en présence de variations des chemins de couplage acoustique.

Par ailleurs, dans les deux exemples, la correction appliquée aux seuils de masquage est de 10 dB. On pourrait tolérer une réduction de quelques dB de cette correction, ce qui améliorerait encore les performances du procédé et du dispositif proposés, alors que la parole perçue, bien que légèrement modifiée par le bruit ajouté, conserverait une qualité tout à fait acceptable dans une application du type téléconférence.

## Revendications

1. Procédé d'annulation d'écho sur N voies de signal sonore ayant chacune un haut-parleur et un microphone associés, N étant un entier supérieur ou égal à 1, suivant lequel, sur chacune des N voies :

    a) on engendre un signal synthétique ayant les caractéristiques spectrales d'un bruit blanc, le spectre de ce signal s'étendant sur plusieurs bandes de fréquence adjacentes, et ce signal synthétique étant décorrélé des signaux synthétiques engendrés sur les autres voies ;
    b) pour chaque bande de fréquence, on calcule un seuil de masquage fréquentiel correspondant au signal associé au haut-parleur de la voie considérée en utilisant des propriétés de la perception auditive humaine ;
    c) dans chaque bande de fréquence, on amène le niveau du signal synthétique à la valeur du seuil de masquage fréquentiel associé, de façon à obtenir un signal auxiliaire ;
    d) on additionne le signal auxiliaire au signal associé au haut-parleur de la voie considérée, les seuils de masquage fréquentiel ayant été précédemment calculés de façon à rendre le signal auxiliaire inaudible, et les signaux auxiliaires des N voies étant mutuellement décorrélés ;
    e) on fournit le signal obtenu précédemment en entrée à un filtre adaptatif dont les coefficients forment une estimation de la réponse impulsionnelle du chemin de couplage acoustique entre le haut-parleur et le microphone associés à la voie de signal sonore considérée ;
    f) on additionne les signaux obtenus en sortie des N filtres adaptatifs associés à chaque voie de microphone et on soustrait le signal résultant du signal reçu par le microphone associé à cette voie ;
    g) on calcule une erreur d'estimation à partir de la différence obtenue à l'issue de la soustraction précédente ;
    h) on corrige les coefficients des filtres adaptatifs associés à la voie de microphone considérée en fonction de l'erreur d'estimation associée.

2. Procédé selon la revendication 1, **caractérisé en ce que**, pour calculer chaque seuil de masquage fréquentiel,

    b1) on forme des blocs contenant chacun un nombre prédéterminé d'échantillons de signal sonore, deux blocs successifs se recouvrant mutuellement sur un nombre prédéterminé d'échantillons ;
    b2) on pondère les échantillons de chaque bloc par une fenêtre d'apodisation ;
    b3) on calcule la transformée de Fourier de chaque bloc ;
    b4) on divise le domaine des fréquences en plusieurs bandes critiques adjacentes ayant des fréquences inférieures et supérieures déterminées ;
    puis, pour chaque bloc et dans chaque bande critique :
    b5) on additionne l'énergie des différentes raies spectrales appartenant à la bande critique, de façon à obtenir la valeur, pour cette bande critique, d'une fonction de répartition de l'énergie ;
    b6) on calcule le produit de convolution de la fonction de répartition de l'énergie et d'une fonction d'étalement basilaire, obtenue à partir d'une table de consultation, de façon à obtenir un spectre étalé $E_i$ ;
    b7) on calcule un indice de tonalité $\alpha_i$ à partir des énergies des raies spectrales appartenant aux différentes bandes critiques ;

b8) on calcule un facteur de correction $O_i$ à partir de l'indice de tonalité calculé précédemment ;

b9) on calcule un seuil de masquage fréquentiel $T_i$ à partir du spectre étalé $E_i$ et du facteur de correction $O_i$, défini comme suit :

$$10 \log_{10} T_i = 10 \log_{10} Ei - O_i - C_i$$

où $C_i$ est un paramètre supplémentaire de correction de seuil calcule a partir de plusieurs caractéristiques des signaux sonores des N voies.

3. Procédé selon la revendication 1 ou 2, **caractérisé en ce que** les caractéristiques servant a calculer ledit paramètre supplémentaire de correction de seuil $C_i$ comprennent le niveau respectif des signaux des N voies et un ensemble de valeurs de la fonction d'intercorrélation d'au moins certaines paires de ces signaux, ledit paramètre supplémentaire de correction $C_i$ étant une fonction croissante des valeurs de cette fonction d'intercorrélation.

4. Procédé selon la revendication 1 ou 2, **caractérisé en ce que** les caractéristiques servant a calculer ledit paramètre supplémentaire de correction de seuil $C_i$ comprennent la somme des énergies contenues dans les diverses bandes critiques de chaque voie et le rapport des énergies par bande critique d'au moins certaines paires des différentes voies, ledit paramètre supplémentaire de correction $C_i$ étant d'autant plus important que la somme des énergies contenues dans les diverses bandes critiques est importante et que le rapport des énergies par bande critique d'une paire de voies est peu différent entre les différentes bandes critiques.

5. Annuleur d'écho à N voies de signal sonore ayant chacune un haut-parleur ($30_1$, ..., $30_N$) et un microphone ($32_1$, ..., $32_N$) associés, N étant un entier supérieur ou égal à 1, comprenant :

- des moyens (34) de calcul de signaux auxiliaires, comportant :

    des moyens (48) de formation de blocs contenant chacun un nombre prédétermine d'échantillons du signal sonore, deux blocs successifs se recouvrant mutuellement sur un nombre prédétermine d'échantillons ;
    des moyens (50) de pondération des échantillons de chaque bloc par une fenêtre d'apodisation, disposés en sortie des moyens de formation de blocs ;
    des moyens (52) de calcul de transformée de Fourier, disposés en sortie des moyens de pondération ;
    des moyens (54) de calcul des valeurs de fréquences inférieures et supérieures de bandes critiques adjacentes couvrant le domaine de fréquences auquel appartient le signal sonore, ou une table de consultation contenant ces valeurs ;
    des moyens (56) pour calculer une fonction de répartition de l'énergie sur les bandes critiques, la valeur, dans une bande critique donnée, de la fonction de répartition de l'énergie étant calculée en additionnant l'énergie des différentes raies spectrales appartenant a cette bande critique ;
    une seconde table de consultation (58), contenant des valeurs représentant des fonctions d'étalement basilaire associées chacune a une bande critique donnée ;
    des moyens (60) pour calculer un spectre étalé $E_i$, en calculant, pour une bande critique donnée, le produit de convolution de la fonction de répartition de l'énergie et de la fonction d'étalement associées a cette bande critique ;
    des moyens (64) de calcul d'un facteur de correction $O_i$ associé à une bande critique donnée ;
    des moyens (66) de calcul d'un seuil de masquage fréquentiel $T_i$ associé a une bande critique donnée, à partir du spectre étalé $E_i$ et du facteur de correction $O_i$ associés a cette bande critique, le seuil de masquage fréquentiel $T_i$ étant défini comme suit :

$$10 \log 10\ T_i = 10 \log in\ E_i - O_i - C_i$$

    où $C_i$ est un paramètre supplémentaire de correction de seuil ;
    des moyens (68) de génération, pour chacune des N voies, d'un signal synthétique ayant les caractéristiques spectrales d'un bruit blanc, le spectre de ce signal s'étendant sur plusieurs bandes de fréquence adjacentes, et ce signal synthétique étant décorrélé des signaux synthétiques engendrés sur les autres voies ;
    des moyens (36) de contrôle, connectés aux N voies de signal sonore, pour calculer pour chaque bande critique ledit paramètre supplémentaire de correction de seuil $C_i$ à partir de plusieurs caractéristiques des signaux sonores des N voies ;

des moyens (70) pour amener le niveau d'un signal synthétique à la valeur du seuil de masquage fréquentiel associé, de façon à obtenir un signal auxiliaire ;

des moyens (72) de calcul de transformée de Fourier inverse ;

des moyens de mémoire pour stocker le résultat du traitement d'un bloc avec le résultat du traitement du bloc précédent ;

des moyens (76) de lecture séquentielle reliés auxdits moyens de mémoire, pour faire passer la cadence des données de la cadence bloc à la cadence échantillon ;

N premiers moyens additionneurs ($40_1$, ..., $40_N$) respectivement disposés sur les N voies de signal sonore, pour additionner sur chaque voie le signal sonore reçu et le signal auxiliaire associé ;

- N x N moyens de filtrage adaptatif ($42_{1.1}$, ..., $42_{1.N}$, ..., $42_{N.1}$, ..., $42_{N.N}$), comprenant N moyens de filtrage adaptatif associés à chacune des N voies de microphone, et ayant chacun des coefficients qui forment une estimation de la réponse impulsionnelle du chemin de couplage acoustique entre le haut-parleur et le microphone associés à une des N voies de signal sonore ;
- des seconds moyens additionneurs ($44_1$, ..., $44_N$), connectés en sortie des N moyens de filtrage adaptatif associés à chaque voie de microphone, pour additionner les signaux de sortie de ces N moyens de filtrage adaptatif ;
- N moyens soustracteurs ($46_1$, ..., $46_N$), disposés chacun en sortie desdits seconds moyens additionneurs ($44_1$, ..., $44_N$) et connectés respectivement aux microphones des N voies de signal sonore, pour soustraire sur chaque voie de microphone le signal obtenu en sortie desdits seconds moyens additionneurs ($44_1$, ..., $44_N$) du signal reçu par le microphone de cette voie ;
- des moyens pour calculer sur chaque voie de microphone une erreur d'estimation à partir du résultat fourni par le moyen soustracteur connecté au microphone de cette voie ;
- des moyens pour corriger de façon itérative les coefficients respectifs des N moyens de filtrage adaptatif associés à chacune des N voies de microphone, en fonction de l'erreur d'estimation associée à chaque voie de microphone.

6. Dispositif selon la revendication 5, **caractérisé en ce que** les caractéristiques servant à calculer ledit paramètre supplémentaire de correction de seuil $C_i$ comprennent le niveau respectif des signaux des N voies et un ensemble de valeurs de la fonction d'intercorrélation d'au moins certaines paires de ces signaux, ledit paramètre supplémentaire de correction $C_i$ étant une fonction croissante des valeurs de cette fonction d'intercorrélation.

7. Dispositif selon la revendication 5, **caractérisé en ce que** les caractéristiques servant à calculer ledit paramètre supplémentaire de correction de seuil $C_i$ comprennent la somme des énergies contenues dans les diverses bandes critiques de chaque voie et le rapport des énergies par bandes critiques d'au moins certaines paires des différentes voies, ledit paramètre supplémentaire de correction $C_i$ étant d'autant plus important que la somme des énergies contenues dans les diverses bandes critiques est importante et que le rapport des énergies par bande critique d'une paire de voies est peu différent entre les différentes bandes critiques.

8. Dispositif selon la revendication 5, **caractérisé en ce qu'**il comprend en outre des moyens (62) de calcul d'un indice de tonalité $\alpha_i$ à partir des énergies des raies spectrales appartenant aux différentes bandes critiques, lesdits moyens (64) de calcul du facteur de correction $O_i$ calculant ledit facteur de correction $O_i$ à partir dudit indice de tonalité $\alpha_i$.

9. Dispositif selon la revendication 8, **caractérisé en ce que** lesdits moyens (64) de calcul du facteur de correction $O_i$ fournissent un facteur de correction $O_i$ défini par :

$$O_i = \max (SO, \alpha_i . (k_1 + B_i) + (1 - \alpha_i).k_2)$$

où max(a, b) désigne la plus grande des valeurs a et b,
où SO, $k_1$ et $k_2$ sont des paramètres de valeur prédéterminée en dB,
où $\alpha_i$ est l'indice de tonalité associé à la bande critique considérée, et
où $B_i$ désigne la fréquence de la bande critique en Bark.

10. Dispositif selon la revendication 9, **caractérisé en ce que** SO = 24,5 dB, $k_1$ = 14,5 dB et $k_2$ = 5,5 dB.

11. Dispositif selon la revendication 8, 9 ou 10, **caractérisé en ce que** les moyens (62) de calcul de l'indice de tonalité fournissent un indice de tonalité constant, identique pour toutes les bandes critiques et défini par :

$$\alpha_i = \alpha = \min(SFM/SFM_{max}, 1)$$

où min(a, b) désigne la plus petite des valeurs a et b,
où $SFM_{max}$ est un paramètre de valeur prédéterminée en dB associé à un signal sinusoïdal pur, et
où $SFM = 10 \log_{10} G/A$, où $\log_{10}$ désigne le logarithme décimal, G désigne la moyenne géométrique de l'énergie sur un nombre prédéterminé de points de la transformée de Fourier et A désigne sa moyenne arithmétique sur le même nombre de points.

12. Dispositif selon la revendication 11, **caractérisé en ce que** $SFM_{max} = -60$ dB.

**Patentansprüche**

1. Verfahren zur Echokompensation auf N Schallsignalkanälen mit jeweils einem Lautsprecher und einem zugeordneten Mikrofon, wobei N eine ganze Zahl größer oder gleich 1 ist, demzufolge auf jedem der N Kanäle:

   a) ein synthetisches Signal mit den spektralen Eigenschaften eines weißen Rauschens erzeugt wird, wobei sich das Spektrum dieses Signals über mehrere benachbarte Frequenzbänder erstreckt und dieses synthetische Signal von auf den anderen Kanälen erzeugten synthetischen Signalen dekorreliert ist;

   b) für jedes Frequenzband unter Ausnutzung der Eigenschaften der menschlichen Hörwahrnehmung eine Frequenzmaskierschwelle berechnet wird, die dem dem Lautsprecher des betreffenden Kanals zugeordneten Signal entspricht;

   c) in jedem Frequenzband der Pegel des synthetischen Signals auf den Wert der zugeordneten Frequenzmaskierschwelle gebracht wird, um ein Hilfssignal zu erhalten;

   d) das Hilfssignal zu den dem Lautsprecher des betreffenden Kanals zugeordneten Signal hinzuaddiert wird, wobei die Frequenzmaskierschwellen vorab berechnet worden sind, um das Hilfssignal unhörbar zu machen, und die Hilfssignale der N Kanäle gegenseitig dekorreliert sind;

   e) das zuvor erhaltene Signal auf den Eingang eines adaptiven Filters gegeben wird, dessen Koeffizienten eine Abschätzung der Impulsantwort des akustischen Kopplungsweges zwischen dem Lautsprecher und dem Mikrofon bilden, die dem betreffenden Schallsignalkanal zugeordnet sind;

   f) die am Ausgang der jedem Mikrofonkanal zugeordneten N adaptiven Filter erhaltenen Signale addiert werden und das resultierende Signal von dem Signal abgezogen wird, das von dem diesem Kanal zugeordneten Mikrofon empfangen wird;

   g) ein Schätzfehler anhand der durch die vorhergehende Subtraktion erhaltenen Differenz berechnet wird;

   h) die Koeffizienten der dem betreffenden Mikrofonkanal zugeordneten adaptiven Filter in Abhängigkeit von dem zugeordneten Schätzfehler korrigiert werden.

2. Verfahren nach Anspruch 1, **dadurch gekennzeichnet, dass** zum Berechnen jeder Frequenzmaskierschwelle

   b1) Blöcke gebildet werden, die jeweils eine vorgegebene Zahl von Schallsignalabtastwerten enthalten, wobei zwei aufeinanderfolgende Blöcke sich auf einer vorgegebenen Zahl von Abtastwerten überschneiden;

   b2) die Abtastwerte jedes Blocks durch ein Apodisierungsfenster gewichtet werden;

   b3) die Fourier-Transformierte jedes Blocks berechnet wird;

   b4) der Frequenzbereich in mehrere benachbarte kritische Bänder mit festgelegten unteren und oberen Frequenzen unterteilt wird;
und dann für jeden Block und jedes kritische Frequenzband:

b5) die Energie der verschiedenen zu dem kritischen Band gehörenden Spektrallinien addiert wird, um für dieses kritische Band den Wert einer Energieverteilungsfunktion zu erhalten;

b6) das Faltungsprodukt der Energieverteilungsfunktion und einer Basilarspreizfunktion, erhalten anhand einer Abfragetabelle, berechnet wird, um ein gespreiztes Spektrum $E_i$ zu erhalten;

b7) ein Tonalitätsindex $\alpha_i$ anhand der Energien der zu den verschiedenen kritischen Bändern gehörenden Spektrallinien berechnet wird;

b8) ein Korrekturfaktor $O_i$ anhand des zuvor berechneten Tonalitätsindex berechnet wird;

b9) eine Frequenzmaskierschwelle $T_i$ anhand des gespreizten Spektrums $E_i$ und des Korrekturfaktors $O_i$, definiert wie folgt, berechnet wird:

$$10 \log_{10} T_i = 10 \log_{10} Ei - O_i - C_i$$

wobei $C_i$ ein zusätzlicher Schwellenkorrekturparameter ist, berechnet anhand mehrerer Charakteristika der Schallsignale der N Kanäle.

3. Verfahren nach Anspruch 1 oder 2, **dadurch gekennzeichnet, dass** die zum Berechnen des zusätzlichen Schwellenkorrekturparameters $C_i$ dienenden Charakteristika den jeweiligen Pegel der Signale der N Kanäle und einen Satz von Werten der Interkorrelationsfunktion von wenigstens bestimmten Paaren dieser Signale umfassen, wobei der zusätzliche Korrekturparameter $C_i$ eine zunehmende Funktion der Werte dieser Interkorrelationsfunktion ist.

4. Verfahren nach Anspruch 1 oder 2, **dadurch gekennzeichnet, dass** die zum Berechnen des zusätzlichen Schwellenkorrekturparameters $C_i$ dienenden Charakteristika die Summe der in den diversen kritischen Bändern jedes Kanals enthaltenen Energien und das Verhältnis der Energien pro kritischem Band für wenigstens bestimmte Paare von verschiedenen Kanälen umfassen, wobei der zusätzliche Korrekturparameter $C_i$ um so größer ist, je größer die Summe der in den diversen kritischen Bändern enthaltenen Energien ist und je weniger sich das Verhältnis der Energien pro kritischem Band bei einem Paar von Kanälen zwischen den verschiedenen kritischen Bändern unterscheidet.

5. Echokompensator mit N Schallsignalkanälen, die jeweils einen Lautsprecher ($30_1$, ..., $30_N$) und ein Mikrofon ($32_1$, ..., $32_N$) in Zuordnung aufweisen, wobei N eine ganze Zahl größer oder gleich 1 ist, mit:

Hilfssignalrechenmitteln (34), welche umfassen:

- Mittel (48) zur Erzeugung von Blöcken, die jeweils eine vorgegebene Zahl von Abtastwerten des Schallsignals enthalten, wobei zwei aufeinanderfolgende Blöcke einander auf einer vorgegebenen Zahl von Abtastwerten überschneiden;

- Mittel (50) zur Gewichtung der Abtastwerte jedes Blocks durch ein Apodisierungsfenster, welche am Ausgang der Blockerzeugungsmittel angeordnet sind;

- Mittel (50) zum Berechnen der Fourier-Transformierten, die am Ausgang der Gewichtungsmittel angeordnet sind;

- Mittel (54) zum Berechnen der Werte von unteren und oberen Frequenzen von benachbarten kritischen Bändern, die den Frequenzbereich, zu dem das Schallsignal gehört, abdecken, oder eine diese Werte enthaltende Abfragetabele;

- Mittel (56) zum Berechnen einer Verteilungsfunktion der Energie auf die kritischen Bänder, wobei der Wert der Energieverteilungsfunktion in einem gegebenen kritischen Band berechnet wird durch Addieren der Energie der verschiedenen zu diesem kritischen Band gehörenden Spektrallinien;

- eine zweite Abfragetabelle (58), die Werte enthält, die jeweils einem gegebenen kritischen Band zugeordnete Basilarspreizfunktionen repräsentieren;

- Mittel (60) zum Berechnen eines gespreizten Spektrums $E_i$ durch Berechnen, für ein gegebenes kritisches Band, des Faltungsprodukts der Energieverteilungsfunktion und der Spreizfunktion, die diesem kritischen Band zugeordnet sind;

- Mittel (64) zum Berechnen eines einem gegebenen kritischen Band zugeordneten Korrekturfaktors $O_i$;

- (Mittel (66) zum Berechnen einer einem gegebenen kritischen Band zugeordneten Frequenzmaskierschwelle $T_i$ ausgehend vom gespreizten Spektrum $<E_i>$ und dem diesem kritischen Band zugeordneten Korrekturfaktor $O_i$, wobei die Frequenzmaskierschwelle $T_i$ definiert ist wie folgt:

$$10 \log_{10} T_i = 10 \log_{10} E_i - O_i - C_i$$

wobei $C_i$ ein zusätzlicher Schwellenkorrekturparameter ist;

- Mittel (68) zum Erzeugen, für jeden der N Kanäle, eines synthetischen Signals mit den spektralen Eigenschaften eines weißen Rauschens, wobei das Spektrum dieses Signals sich über mehrere benachbarte Frequenzbänder erstreckt und dieses synthetische Signal von den auf den anderen Kanälen erzeugten synthetischen Signalen dekorreliert ist;

- Steuermittel (36), die an die N Schallsignalkanäle angeschlossen sind, um für jedes kritische Band den zusätzlichen Schwellenkorrekturparameter $C_i$ anhand von mehreren Charakteristika der Schallsignale der N Kanäle zu berechnen;

- Mittel (70), um den Pegel eines synthetischen Signals auf den zugeordneten Frequenzmaskierschwellwert zu bringen, um ein Hilfssignal zu erhalten;

- Mittel (72) zum Berechnen der inversen Fourier-Transformierten;

- Speichermittel zum Speichern des Ergebnisses der Verarbeitung eines Blocks mit dem Ergebnis der Verarbeitung des vorhergehenden Blocks;

- Mittel (76) zum sequentiellen Lesen, die mit den Speichermitteln verbunden sind, um den Datentakt vom Blocktakt auf den Abtastwerttakt zu bringen;

- N erste Addiermittel ($40_1$, ..., $40_N$), die jeweils an dem N Schallsignalkanälen angeordnet sind, um auf jedem Kanal das empfangene Schallsignal und das zugeordnete Hilfssignal zu addieren;

- N X N adaptive Filtermittel ($42_{1.1}$, $42_{1.N}$, ..., $42_{N.1}$, ..., $42_{N.N}$) mit N adaptiven Filtermitteln, die jedem der N Mikrofonkanäle zugeordnet sind und jeweils Koeffizienten haben, die eine Abschätzung der Impulsantwort des akustischen Kopplungsweges zwischen dem Lautsprecher und dem Mikrofon, die einem der N Schallsignalkanäle zugeordnet sind, ermöglicht;

- zweite Addiermittel ($44_1$, ..., $44_N$), die an den Ausgang der jedem Mikrofon zugeordneten N adaptiven Filtermittel angeschlossen sind, um die Ausgangssignale dieser N adaptiven Filtermittel zu addieren;

- N Subtrahiermittel ($46_1$, ..., $46_N$), die jeweils am Ausgang der zweiten Addiermittel ($44_1$, ..., $44_N$) angeordnet und jeweils mit den Mikrofonen der N Schallsignalkanäle verbunden sind, um auf jedem Mikrofonkanal das am Ausgang der zweiten Addiermittel ($44_1$, ..., $44_N$) erhaltene Signal von dem durch das Mikrofon dieses Kanals empfangenen Signal zu subtrahieren;

- Mittel zum Berechnen, auf jedem Mikrofonkanal, eines Schätzfehlers ausgehend von dem Ergebnis, das von dem an das Mikrofon dieses Kanals angeschlossenen Subtrahiermittel geliefert wird;

- Mittel zum iterativen Korrigieren der jeweiligen Koeffizienten der jedem der N Mikrofonkanäle zugeordneten N adaptiven Filtermittel in Abhängigkeit von dem jedem Mikrofonkanal zugeordneten Schätzfehler.

6. Vorrichtung nach Anspruch 5, **dadurch gekennzeichnet, dass** die Merkmale, die zum Berechnen des zusätzlichen Schwellenkorrekturparameters $C_i$ dienen, den jeweiligen Pegel der Signale der N Kanäle und einen Satz von Werten der Interkorrelationsfunktion von wenigstens bestimmten Paaren dieser Signale umfassen, wobei der zusätzliche Korrekturparameter $C_i$ eine zunehmende Funktion der Werte dieser Interkorrelationsfunktion ist.

7. Vorrichtung nach Anspruch 5, **dadurch gekennzeichnet, dass** die Charakteristika, die zum Berechnen des zusätzlichen Schwellenkorrekturparameters $C_i$ dienen, die Summe der in den diversen kritischen Bändern jedes Kanals enthaltenen Energien und das Verhältnis der Energien pro kritischen Bändern von wenigstens bestimmten Paaren von verschiedenen Kanälen umfassen, wobei der zusätzliche Korrekturparameter $C_i$ um so größer ist, je größer die Summe der in den diversen kritischen Bändern enthaltenen Energien ist, und je weniger sich das Verhältnis der Energien pro kritischem Band eines Paars von Kanälen zwischen den verschiedenen kritischen Bändern unterscheidet.

8. Vorrichtung nach Anspruch 5, **dadurch gekennzeichnet, dass** sie ferner Mittel (62) zum Berechnen eines Tonalitätsindex $\alpha_i$ anhand der Energien der zu den verschiedenen kritischen Bändern gehörenden Spektrallinien umfasst, wobei die Mittel (64) zum Berechnen des Korrekturfaktors $O_i$ den Korrekturfaktor $O_i$ anhand des Tonalitätsindex $\alpha_i$ berechnen.

9. Vorrichtung nach Anspruch 8, **dadurch gekennzeichnet, dass** die Mittel (64) zum Berechnen des Korrekturfaktors $O_i$ einen Korrekturfaktor $O_i$ liefern, der definiert ist durch:

$$O_i = \max ( SO , \alpha_i . (k_1 + B_i) + (1 - \alpha_i).k_2)$$

wobei max(a, b) den größeren der Werte a und b bezeichnet,
SO, $k_1$ und $k_2$ Parameter von vorgegebenem Wert in Dezibel sind;
$\alpha_i$ der dem betreffenden kritischen Band zugeordnete Tonalitätsindex ist, und
$B_i$ die Frequenz des kritischen Bandes in Bark bezeichnet.

10. Vorrichtung nach Anspruch 9, **dadurch gekennzeichnet, dass** SO = 24, 5 dB, $k_1$ = 14,5 dB und $k_2$ = 5,5 dB.

11. Vorrichtung nach Anspruch 8, 9 oder 10, **dadurch gekennzeichnet, dass** die Mittel (62) zum Berechnen des Tonalitätsindex einen konstanten, für alle kritischen Bänder identischen Tonalitätsindex, definiert durch:

$$\alpha_i = \alpha = \min(SFM/SFM_{max}, 1)$$

liefern, wobei min(a,b) den kleineren der Werte a und b bezeichnet, $SFM_{max}$ ein Parameter mit einem vorgegebenen Wert in Dezibel ist, der einem reinen Sinussignal zugeordnet ist, und
SFM = 10 $\log_{10}$ G/A ist, wobei $\log_{10}$ den Zehnerlogarithmus bezeichnet, G das geometrische Mittel der Energie auf einer vorgegebenen Zahl von Punkten der Fourier-Transformierten und A deren arithmetisches Mittel auf der gleichen Zahl von Punkten bezeichnet.

12. Vorrichtung nach Anspruch 11, **dadurch gekennzeichnet, dass** $SFM_{max}$ = -60 dB.

**Claims**

1. An echo cancellation method on N sound signal channels each having a loudspeaker and an associated microphone, N being an integer greater than or equal to 1, according to which, on each of the N channels:

   a) a synthetic signal is created having the spectral characteristics of a white noise, the spectrum of this signal extending over several adjacent frequency bands, and this synthetic signal being uncorrelated with the synthetic signals created on the other channels;

   b) for each frequency band, a frequency masking threshold is computed corresponding to the signal associated with the loudspeaker of the considered channel by using properties of human auditory perception;

c) in each frequency band, the synthetic signal level is brought to the value of the associated frequency masking threshold, so as to obtain an auxiliary signal;

d) the auxiliary signal is added to the signal associated with the loudspeaker of the considered channel, the frequency masking thresholds having been previously computed so as to make the auxiliary signal inaudible, and the auxiliary signals of the N channels being mutually uncorrelated;

e) the signal obtained previously is supplied as input to an adaptive filter the coefficients of which form an estimation of the impulse response of the acoustic coupling path between the loudspeaker and the microphone associated with the sound signal channel considered;

f) the signals obtained as output from the N adaptive filters associated with each microphone channel are added and the resultant of the signal is subtracted from the signal received by the microphone associated with this channel;

g) an estimation error is computed from the difference obtained at the outcome of the previous subtraction;

h) the coefficients of the adaptive filters associated with the considered microphone channel are corrected as a function of the associated estimation error.

**2.** A method according to claim 1, wherein, in order to compute each frequency masking threshold,

b1) blocks are formed each containing a pre-specified number of sound signal samples, two successive blocks mutually overlapping over a pre-specified number of samples;
b2) the samples of each block are weighted by an apodisation window;
b3) the Fourier transform of each block is computed;
b4) the frequency range is divided into several adjacent critical bands having specified lower and upper frequencies;
then, for each block and in each critical band:
b5) the energies of the different spectrum lines belonging to the critical band are added, so as to obtain the value, for this critical band, of an energy distribution function;
b6) the convolution product of the energy distribution function and a basilar spreading function is computed, obtained from a look-up table, so as to obtain a spread spectrum $E_i$;
b7) a tonality index $[alpha]_i$ is computed from the energies of the spectrum lines belonging to the different critical bands;
b8) a correction factor $O_i$ is computed from the tonality index previously computed;
b9) a frequency masking threshold $T_i$ is computed from the spread spectrum $E_i$ and from the correction factor $O_i$, the frequency masking threshold $T_i$ being defined as follows:

$$10 \log_{10} T_i = 10 \log_{10} E_i - O_i - C_i$$

where $C_i$ is an additional threshold correction parameter computed from several characteristics of the sound signals from the N channels.

**3.** A method according to claim 2, wherein the characteristics serving to compute said additional threshold correction parameter $C_i$ include the respective level of the signals of the N channels and a set of values of the inter-correlation function from at least some pairs of these signals, said additional correction parameter $C_i$ being a function increasing with the values of this inter-correlation function.

**4.** A method according to claim 2, wherein the characteristics serving to compute said additional threshold correction parameter $C_i$ include the sum of the energies contained in the various critical bands of each channel and the ratio of the energies per critical band of at least some pairs of the different channels, wherein the more the sum of the energies contained in the various critical bands is significant and the less the ratio of the energies per critical band of a pair of channels is different between the different critical bands, then the more said additional correction parameter $C_i$ is significant.

5. An echo canceller with N sound signal channels each having a loudspeaker $(30_1,...,30_N)$ and an associated microphone $(32_1,...,32_N)$, N being an integer greater than or equal to 1, including:

- means (34) for computing auxiliary signals, comprising:

    means (48) for forming blocks each containing a pre-specified number of samples of the sound signal, two successive blocks mutually overlapping over a pre-specified number of samples;

    means (50) for weighting the samples of each block by an apodisation window, placed at the output of the means for forming blocks;

    means (52) for computing a Fourier transform, placed at the output of the weighting means;

    means (54) for computing the lower and upper frequency values of adjacent critical bands covering the frequency range to which the sound signal belongs, or a look-up table containing these values;

    means (55) for computing an energy distribution function on the critical bands, the value, in a given critical band, of the energy distribution function being computed by adding the energy of the different spectrum lines belonging to this critical band;

    a second look-up table (58), containing values representing the basilar spreading functions each associated with a given critical band;

    means (60) for computing a spread spectrum Ei, by computing, for a given critical band, the convolution product of the energy distribution function and the spreading function associated with this critical band;

    means (64) for computing a correction factor Oi associated with a given critical band;

    means (66) for computing a frequency masking threshold Ti associated with a given critical band, from the spread spectrum Ei and from the correction factor Oi associated with this critical band, the frequency masking threshold Ti being defined as follows:

$$10 \log10Ti = 10 \log10Ei - Oi - Ci$$

    where Ci is an additional threshold correction parameter;

    means (68) for generating, for each of the N channels, a synthetic signal having the spectral characteristics of a white noise, the spectrum of which extends over several adjacent frequency bands, and this synthetic signal being uncorrelated from the synthetic signals produced for the other channels;

    control means (36), connected to the N sound signal channels, for computing for each critical band said additional threshold correction parameter Ci from several characteristics of the sound signals from the N channels;

    means (70) for bringing the level of a synthetic signal to the value of the associated frequency masking threshold, so as to obtain an auxiliary signal;

    means (72) for computing an inverse Fourier transform;

    memory means for storing the result of the processing of a block with the result of the processing of the previous block;

    sequential reading means (76) connected to said memory means, in order to pass the rate of data from the block rate to the sample rate;

    N first adder means $(40_1, ..., 40_N)$ respectively placed on the N sound signal channels, for adding on each channel the received sound signal and the associated auxiliary signal;

- N x N adaptive filtering means ($42_{1.1}$, ..., $42_{1.N}$, ..., $42_{N.1}$, ... $42_{N.N}$), including N adaptive filtering means associated with each of the N microphone channels, and each having coefficients which form an estimation of the impulse response of the acoustic coupling path between the loudspeaker and the microphone associated with one of the N sound signal channels;

- second adder means ($44_1$, ..., $44_N$), connected to the output of the N adaptive filtering means associated with each microphone channel, for adding the output signals of these N adaptive filtering means;

- N subtractor means ($46_1$, ..., $46_N$) each placed at the output of said second adder means ($44_1$, ..., $44_N$) and connected respectively to the microphones of the N sound signal channels, for subtracting on each microphone channel the signal obtained at output from said second adder means ($44_1$, ..., $44_N$) from the signal received by the microphone of this channel;

- means for computing on each microphone channel an estimation error from the result supplied by the subtractor means connected to the microphone of this channel;

- means for correcting in an iterative manner the respective coefficients of the N adaptive filtering means associated with each of the N microphone channels, as a function of the estimation error associated with each microphone channel.

6. A device according to claim 5, wherein the characteristics serving to compute said additional threshold correction parameter Ci include the respective level of the signals of the N channels and a set of values of the inter-correlation function of at least some pairs of these signals, said additional correction parameter Ci being a function increasing with the values of this inter-correlation function.

7. A device according to claim 5, wherein the characteristics serving to compute said additional threshold correction parameter Ci include the sum of the energies contained in the various critical bands of each channel and the ratio of the energies per critical band of at least some pairs of the different channels, wherein the more the sum of the energies contained in the various critical bands is significant and the less the ratio of the energies per critical band of a pair of channels is different between the different critical bands, then the more said additional correction parameter Ci is significant.

8. A device according to claim 5, further comprising means (62) for computing a tonality index [alpha]i from the energies of the spectrum lines belonging to the different critical bands, said means (64) for computing the correction factor Oi computing said correction factor Oi from said tonality index $\alpha$i.

9. A device according to claim 8, wherein said means (64) for computing the correction factor Oi supply a correction factor Oi defined by:

$$Oi=max(SO, [alpha]i.(k1+Bi)+(1-[alpha]i).k2)$$

where max(a, b) designates the largest of the values a and b, where SO, k1 and k2 are parameters of pre-specified value in dB, where [alpha]i is the tonality index associated with the considered critical band, and where Bi designates the frequency of the critical band in Bark.

10. A device according to claim 9, wherein SO=24.5 dB, k1=14.5 dB and k2=5.5 dB.

11. A device according to claim 8, wherein the means (62) for computing the tonality index supply a constant tonality index, identical for all the critical bands and defined by:

$$\alpha i=\alpha=min(SFM/SFM\ max,1)$$

where min(a, b) designates the smallest of the values a and b,
where SFMmax is a parameter of pre-specified value in dB associated with a pure sinusoidal signal, and
where SFM=10 log10G/A where log10 designate the logarithm to base 10, G designates the geometric mean of the energy over a pre-specified number of points of the Fourier transform and A designates the arithmetic mean of the energy over the same number of points.

12. A device according to claim 11, wherein SFMmax= -60 db.

# FIG.1

# FIG.2

# FIG.3

```
┌─────────────────────────┐
│      GENERATION DE       │
│   SIGNAUX SYNTHETIQUES   │
└─────────────────────────┘
            │
            ▼
┌─────────────────────────┐          PROPRIETES
│      CALCUL  DES         │◄───────  DE LA
│  SEUILS  DE  MASQUAGE    │          PERCEPTION
└─────────────────────────┘          AUDITIVE
            │
            ▼
┌─────────────────────────┐
│      GENERATION  DE      │
│   SIGNAUX  AUXILIAIRES   │
└─────────────────────────┘
            │
            ▼
┌───────────────────────────────────┐
│         SUR  CHAQUE  VOIE,         │
│  ADDITION  DU  SIGNAL  AUXILIAIRE  │
│  ET  DU  SIGNAL  DE  HAUT-PARLEUR  │
└───────────────────────────────────┘
            │
            ▼
┌─────────────────────────┐
│    FILTRAGE  ADAPTATIF   │
└─────────────────────────┘
```

EP 0 919 096 B1

FIG.4

25

# FIG.5

EP 0 919 096 B1

# FIG.6a

# FIG.6b

# FIG.7a

# FIG.7b